# EUROPEAN PATENT SPECIFICATION

(11) **EP 1 464 750 B1**
(45) Date of publication and mention of the grant of the patent: **02.09.2009**
(21) Application number: 04000336.0
(22) Date of filing: 09.01.2004
(51) Int. Cl.: D06F 39/04, D06F 35/00, D06F 39/08

(54) **Steam jet drum washing machine**
Dampfstrahlwaschmaschine
Machine à laver à jet de vapeur

(30) Priority: 31.03.2003 KR 2003020206
(43) Date of publication of application: 06.10.2004
(60) Divisional application: 09009698.3
(73) Proprietor: LG Electronics, Inc., Seoul 150-010 (KR)
(72) Inventor: Kim, Jin Woong, Kwangmyung-si, Kyungki-do 423-757 (KR); Woo, Kyung Chul, Yangchun-ku, Seoul 158-072 (KR); Oh, Soo Young, Yangchun-ku, Seoul 158-785 (KR); Jeon, Si Moon, Seocho-ku, Seoul 137-062 (KR)
(74) Representative: Urner, Peter

(56) References cited:
- GB-A- 799 788
- GB-A- 1 222 227
- GB-A- 2 348 213
- PATENT ABSTRACTS OF JAPAN vol. 2003, no. 05, 12 May 2003 (2003-05-12) -& JP 2003 019382 A (MITSUBISHI ELECTRIC CORP), 21 January 2003 (2003-01-21)
- PATENT ABSTRACTS OF JAPAN vol. 0164, no. 49 (C-0986), 18 September 1992 (1992-09-18) & JP 4 158896 A (SANYO ELECTRIC CO LTD), 1 June 1992 (1992-06-01)
- PATENT ABSTRACTS OF JAPAN vol. 2003, no. 08, 6 August 2003 (2003-08-06) -& JP 2003 093775 A (MATSUSHITA ELECTRIC IND CO LTD), 2 April 2003 (2003-04-02)

## Description

### BACKGROUND OF THE INVENTION

### Field of the Invention

The present invention relates to a drum washing machine which is capable of lifting clothes to a predetermined height and then dropping the lifted clothes so that the clothes can be washed by means of friction and impact, and more particularly to a steam jet drum washing machine which is capable of heating wash water and spraying the heated wash water into a tub and a drum of the washing machine in a phase of high-temperature steam, whereby sterilizing and washing efficiencies of the drum washing machine are improved.

### Description of the Related Art

A drum washing machine is a kind of washer which is capable of washing clothes by friction between a drum rotated by a motor and the clothes put in the drum while a detergent and wash water are supplied in a horizontally mounted tub and the drum, which is disposed in the tub. With the drum washing machine, the clothes are neither damaged nor tangled with one another. Furthermore, the drum washing machine washes clothes by striking and rubbing the clothes, whereby washing efficiency is improved.

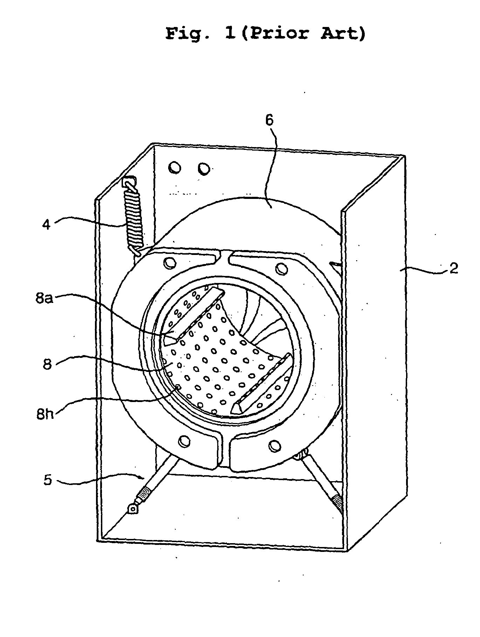

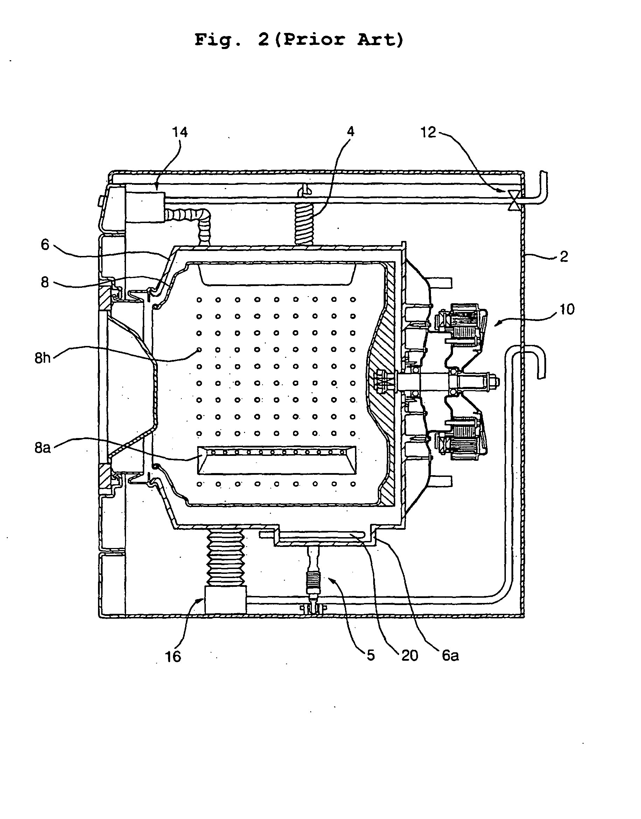

Fig. 1 is a perspective view of a conventional drum washing machine, and Fig. 2 is a side view, in cross section, of the conventional drum washing machine.

As shown in Figs. 1 and 2, the conventional drum washing machine comprises: a casing 2 forming the exterior of the drum washing machine; a tub 6 disposed in the casing 2 in such a manner that the tub 6 is suspended by means of springs 4 and simultaneously supported by means of damper assemblies 5; a drum 8 rotatably mounted in the tub 6, in which clothes are put and into which wash water is supplied; a plurality of vanes 8a provided on the inner circumference of the drum 8 for lifting the clothes in the drum 8 as the drum 8 is rotated, the vanes 8a being longitudinally extended parallel to the axis of rotation of the drum 8 and inwardly protruded to a predetermined height while the vanes 8a are uniformly spaced apart from each other; and a motor 10 connected to the drum 8 in the rear of the tub 6 for rotating the drum 8.

The drum washing machine further comprises: a water-supply valve assembly 12 mounted above the tub 6 for supplying wash water into the tub 6 and the drum 8; a detergent box assembly 14 also mounted above the tub 6 for supplying a detergent into the tub 6 and the drum 8; and a drainage pump assembly 16 mounted below the tub 6 for draining the wash water from the tub 6 and the drum 8.

The drum 8 is provided at the inner circumference thereof with a plurality of through-holes 8h, through which the wash water flows between the drum 8 and the tub 6. When the drum 8 is rotated to dewater the clothes, the wash water contained in the clothes is separated from the clothes by means of the centrifugal force of the drum 8. At this time, the wash water separated from the clothes is discharged through the through-holes 8h. The water-supply valve assembly 12 includes a water-supply valve (not shown) so that the water-supply valve assembly 12 supplies wash water into the tub 6 and the drum 8 when the water-supply valve is opened. Similarly, the drainage pump assembly 16 includes a drainage pump (not shown) so that the drainage pump assembly 16 discharges the wash water from the tub 6 and the drum 8 when the drainage pump is operated.

To the lower part of the tub 6 is mounted a heater 20 for heating wash water in the tub 6 to a high temperature, by which the washing efficiency is improved. Specifically, the tub 6 includes a heater mounting part 6a formed at the lower part thereof. The heater mounting part 6a of the tub 6 is downwardly extended from the tub 6 so that the heater 20 is mounted in the heater mounting part 6a. The heater 20 is slidably inserted into the heater mounting part 6a of the tub 6 from the front part thereof, and then securely fixed to the heater mounting part 6a of the tub 6.

The operation of the conventional drum washing machine with the above-stated construction will now be described.

When a washing process is performed while clothes are put in the drum 8, the water-supply valve is opened so that a proper amount of wash water is supplied into the tub 6 and the drum 8 depending upon the amount of the clothes. The wash water passes through the water-supply valve assembly 12, and then passes through the detergent box assembly 14. The wash water having passed through the detergent box assembly 14 is supplied into the tub 6 together with a detergent.

When the drum 8 is rotated by operation of the motor 10, the clothes are lifted to a predetermined height by the vanes 8a and then dropped from the vanes 8a so that the clothes can be washed by means of friction and impact. At this time, the heater 20 may be operated to heat the wash water in the tub 6 so that the washing efficiency is improved.

After the washing process is finished, the drainage pump is operated so that the wash water is discharged. Subsequently, the motor 10 is rotated at a high speed, and thus the drum 8 is also rotated at a high speed. When the drum 8 is rotated, the wash water contained in the clothes is separated from the clothes by means of the centrifugal force of the drum 8. At this time, the wash water separated from the clothes is discharged through the through-holes 8h. In this way, an intermittent dewatering process is performed. Thereafter, the water-supply valve is opened again so that wash water is supplied into the tub 6 and the drum 8. At the same time, the drum 8 is rotated so that a rinsing process is performed.

The aforementioned rinsing and intermittent dewatering processes are alternately and repeatedly carried out, and finally a dewatering process is performed. In this way, a cleaning process is completed.

In the conventional drum washing machine, however, the wash water is supplied into the tub 6 from the upper part thereof together with the detergent via the water-supply valve assembly 12 and the detergent box assembly 14, and the wash water supplied into the tub 6 is heated by the heater 20 mounted to the lower part of the tub 6. As can be easily understood from the above description, the wash water initially supplied into the tub is cold. Consequently, the wash water is slowly absorbed by the clothes.

The conventional drum washing machine includes the heater mounting part 6a of the tub 6, which is provided so that the heater 20 is mounted in the tub 6. The heater mounting part 6a is formed at the lower part of the tub 6 in such a manner that the heater mounting part 6a is downwardly extended from the tub 6. Consequently, it is required to provide an additional space necessary for forming the heater mounting part 6a in the tub 6, which complicates construction of the drum washing machine.

The wash water supplied in the tub 6 is heated by the heater 20. Since the heater 20 is mounted in the heater mounting part 6a of the tub 6, the wash water is also filled in the heater mounting part 6a of the tub 6, and thus the wash water filled in the heater mounting part 6a of the tub 6 is also heated. However, the wash water filled in the heater mounting part 6a of the tub 6 is not used to wash the clothes. Consequently, wash water and electric energy are uselessly wasted. In addition, the detergent is left with the wash water in the heater mounting part 6a of the tub 6, by which the washing efficiency of the drum washing machine is decreased.

JP 2003-019382 A discloses a washing machine that comprises a main body having a water tank portion arranged and installed in the main body, a top cover covering the top surface of the washing machine main body and having an opening portion 3a so that laundry can be put into the water tank, and a cover for covering the top surface of the top cover.

The washing machine comprises a pre-washing apparatus including a boiler having heating means and a jet nozzle for jetting steam and warm water to the laundry by using a pressure of the steam generated by the boiler when prewashing laundry so as to remove dirt from a specific part of the laundry like the collar or the sleeves of a shirt prior to the regular washing process.

The boiler comprises a container the inlet port of which is connected with a water supply tube to supply water to the boiler. A water supply unit for supplying water to the water tank is not explicitly shown.

GB 799,788 discloses a washing machine having an outer housing or washing tub and a drum rotatably mounted in the tub. Fresh water can be supplied to the washing machine via a valve assembly and a water supply pipe.

For heating the water in the tub or housing, steam can be supplied to the lower part of the housing, i.e. into that part of the housing that is located below the drum by means of a pipe that is connected with a main steam pipe via a throttle valve and a steam valve.

According JP 04-158 896 steam is generated by heating water supplied into an outer tub so that the generated steam can penetrate from the outer tub into an inner washing tub through a plurality of holes in the circumferential wall of the inner washing tub.

GB 1 222 227 A discloses a washing machine for washing and spin-drying that comprises a housing in which a rotating drum is arranged. The housing is mounted on a rolling plate which is pivotally journalled about a horizontal pivoting shaft. The pivoting shaft is constructed as a hollow shaft so that it can serve on the left hand side for supplying steam and on the right hand side for supplying water and detergent from a storage vessel.

GB 2 348 213 A discloses a washing and drying machine having a pressurizable capsule for receiving articles to be washed, rinsed and dried. Heated wash water can be supplied to the capsule by means of a pump via a pipe and a solenoid valve assembly such that the heated water is forced into the enclosure or capsule under high pressure as finely dispersed or defused droplets forming a mist or vapor.

### SUMMARY OF THE INVENTION

The object of the present invention is to provide an improved steam jet drum washing machine which is capable of heating water and spraying steam into a drum and a tub of the washing machine.

This object is achieved by the steam jet drum washing machine according to claim 1.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a perspective view of a conventional drum washing machine;
Fig. 2 is a side view, in cross section, of the conventional drum washing machine;
Fig. 3 is a perspective view of a steam jet drum washing machine according to a first preferred embodiment of the present invention;
Fig. 4 is a side view, in cross section, of the steam jet drum washing machine according to the first preferred embodiment of the present invention;
Fig. 5 is a perspective view showing a steam generator of the present invention;
Fig. 6 is a cross-sectional view taken along line A-A of Fig. 5; and
Fig. 7 is a perspective view of a steam jet drum washing machine according to a second preferred embodiment of the present invention.

### DESCRIPTION OF THE PREFERRED EMBODIMENTS

Now, preferred embodiments of the present invention will be described in detail with reference to the accompanying drawings. In the drawings, the same or similar elements are denoted by the same reference numerals even though they are depicted in different drawings.

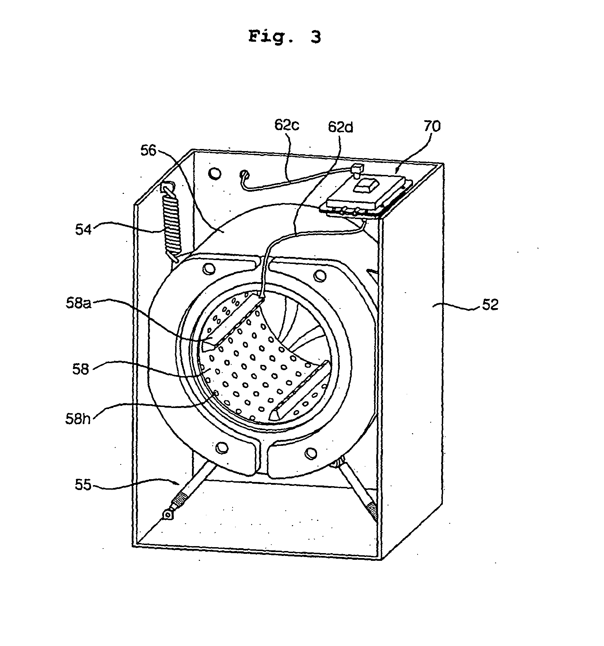

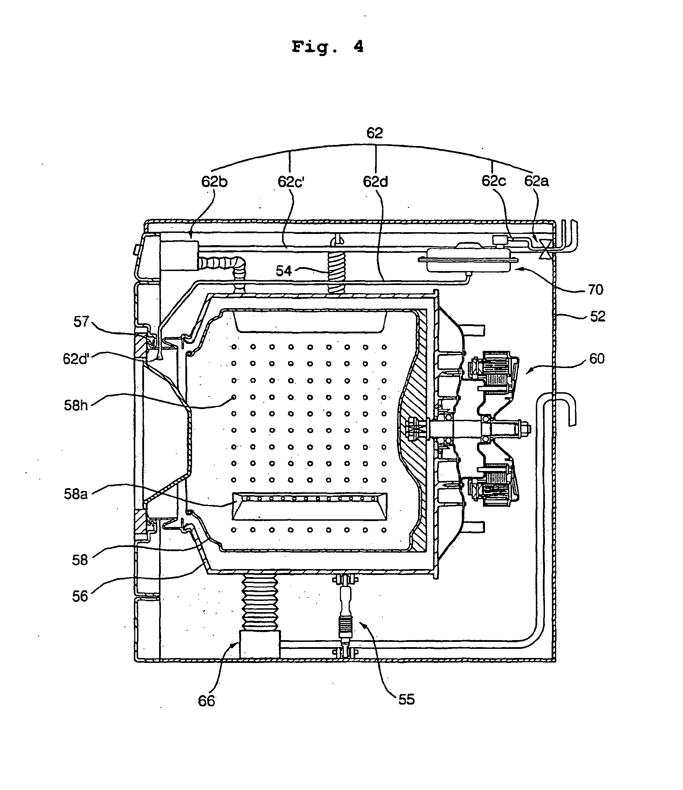

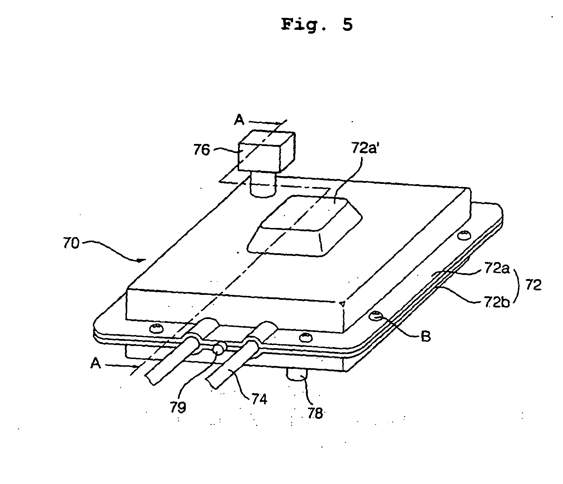

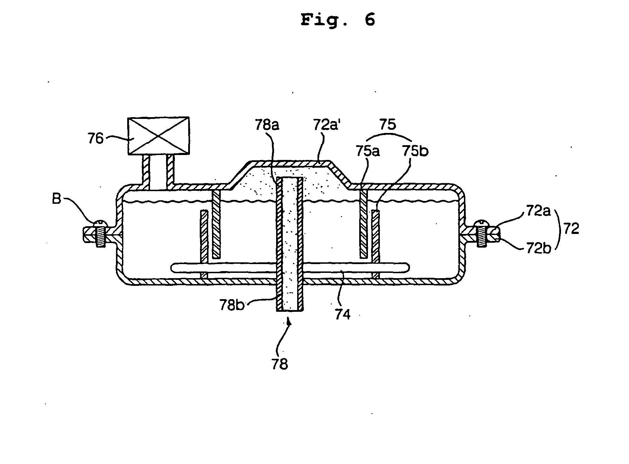

Fig. 3 is a perspective view of a steam jet drum washing machine according to a first preferred embodiment of the present invention, Fig. 4 is a side view, in cross section, of the steam jet drum washing machine according to the first preferred embodiment of the present invention, Fig. 5 is a perspective view showing a steam generator of the present invention, and Fig. 6 is a cross-sectional view taken along line A-A of Fig. 5.

As shown in Figs. 3 and 4, the steam jet drum washing machine according to the first preferred embodiment of the present invention comprises: a casing 52 forming the exterior of the drum washing machine; a tub 56 disposed in the casing 52 in such a manner that the tub 56 is suspended by means of springs 54 and simultaneously supported by means of damper assemblies 55; a drum 58 rotatably mounted in the tub 56, in which clothes are put and into which wash water is supplied; a plurality of vanes 58a provided on the inner circumference of the drum 58 for lifting the clothes in the drum 58 as the drum 58 is rotated, the vanes 58a being longitudinally extended parallel to the axis of rotation of the drum 58 and inwardly protruded to a predetermined height while the vanes 58a are uniformly spaced apart from each other; a motor 60 connected to the drum 58 in the rear of the tub 56 for rotating the drum 58; and a steam generator 70 disposed above the tub 56 for heating the wash water to obtain high-temperature steam, which is supplied to the tub 56 and the drum 58.

The steam jet drum washing machine further comprises: a water-supply unit 62 mounted above the tub 56 for supplying wash water into the tub 56 and the drum 58; and a drainage pump assembly 66 mounted below the tub 56 for draining the wash water from the tub 56 and the drum 58. The steam generator 70 is connected to the water-supply unit 62.

The water-supply unit 62 comprises: a water-supply valve assembly 62a including a water-supply valve mounted to the rear of the casing 52 for supplying wash water; a detergent box assembly 62b mounted between the water-supply valve assembly 62a and the tub 56 for storing a detergent; a water-supply tube 62c connected between the water-supply valve assembly 62a and the steam generator 70; an auxiliary water-supply tube 62c' connected between the water-supply valve assembly 62a and the detergent box assembly 62b; and a steam tube 62d having one end connected to the steam generator 70 and the other end 62d' disposed in the tub 56 and the drum 58 for supplying the steam into the tub 56 and the drum 58.

Alternatively, the water-supply unit 62 may comprise the water-supply valve assembly 62a, the water-supply tube 62c, and the steam tube 62d so that the wash water is supplied into the tub 56 and the drum 58 via only the steam generator 70.

The drum 58 is provided at the inner circumference thereof with a plurality of through-holes 58h, through which the wash water flows between the drum 58 and the tub 56. When the drum 58 is rotated to dewater the clothes, the wash water contained in the clothes is separated from the clothes by means of the centrifugal force of the drum 58. At this time, the wash water separated from the clothes is discharged through the through-holes 58h. The water-supply valve assembly 62 includes a water-supply valve (not shown) so that the water-supply valve assembly 62 supplies wash water into the tub 56 and the drum 58 when the water-supply valve is opened. Similarly, the drainage pump assembly 66 includes a drainage pump (not shown) so that the drainage pump assembly 66 discharges the wash water from the tub 56 and the drum 58 when the drainage pump is operated.

The water-supply tube 62c is connected between the water-supply valve assembly 62a and the steam generator 70 so that the wash water is supplied into the steam generator 70. The auxiliary water-supply tube 62c' is connected between the water-supply valve assembly 62a and the detergent box assembly 62b so that the wash water is supplied into the detergent box assembly 62b. The supply of the wash water into the water-supply tube 62c or the auxiliary water-supply tube 62c' is controlled by the water-supply valve.

Alternatively, an additional auxiliary water-supply valve (not shown) may be mounted in the auxiliary water-supply tube 62c' so that the supply of the wash water into the water-supply tube 62c and the auxiliary water-supply tube 62c' is separately controlled.

The end 62d' of the steam tube 62d is formed in the shape of a nozzle so that steam is sprayed at a high speed from the end 62d'. The end 62d' of the steam tube 62d penetrates through the upper end of a gasket 57 mounted for preventing leakage of water between the tub 56 and the casing 52. Consequently, the steam guided along the steam tube 62d is downwardly sprayed through the end 62d' of the steam tube 62d into the tub 56 and the drum 58.

The water-supply tube 62c and the steam tube 62d are relatively short by the provision of the steam generator 70. The steam generator 70 is disposed above the tub 56 between the tub 56 and the casing 52 so that repair and inspection of the stem generator 70 can be easily and conveniently conducted. For example, the steam generator 70 may be securely mounted to the tub 56 or the casing 52 by means of fixing members (not shown).

As shown in Figs. 5 and 6, the steam generator 70 comprises: a container 72 connected at the top end thereof to the water-supply tube 62c and the steam tube 62d and having an inner space for storing wash water defined therein; a heater 74 mounted in the container 72 for heating the wash water stored in the container 72; an inlet valve 76 disposed between the water-supply tube 62c and the container 72 for supplying the wash water into the container 72; and an outlet tube 78 penetrating through the bottom of the container 72, the outlet tube 78 having the upper end disposed in the upper part of the container 72 and the lower end connected to the steam tube 62d for guiding steam into the steam tube 62d.

The container 72 comprises an upper container part 72a forming the upper part of the container 72, and a lower container part 72b forming the lower part of the container 72. The upper container part 72a and the lower container part 72b are preferably attached at the edges thereof to each other by means of bolts B. The upper container part 72a is provided at the center thereof with a steam storing space 72a', which is upwardly protruded for temporarily storing steam.

The heater 74 is horizontally disposed in the lower container part 72b so that heater 74 can be submerged under the wash water even when the wash water is supplied into the container 72 to the minimum water level. Preferably, the heater 74 is an electric heater formed in the shape of a curved pipe so that the heating surface area is increased.

The steam generator 70 further comprises a temperature sensor 79 for sensing the temperature inside the container 72 to control the operation of the heater 74 on the basis of the temperature inside the container 72. The temperature sensor 79 also serves as a safety switch, such as a thermostat, for cutting off the supply of electric current to the heater 74 to stop the operation of the heater 74.

The inlet valve 76 is preferably a solenoid valve whose opening or closing operation is electronically controlled, which can be used at a low temperature as well as at a low pressure, and can be economically used.

Opening or closing the inlet valve 76 is controlled by means of a water-level sensor (not shown) for sensing the level of the wash water supplied into the tub 56 or an auxiliary water-level sensor (not shown) for sensing the level of the wash water supplied into the container 72. The auxiliary water-level sensor senses the level of the wash water on the basis of the movement of a float on the wash water. Alternatively, the auxiliary water-level sensor may sense the level of the wash water on the basis of the change in inside pressure of the container 72 when the wash water is supplied into the container 72.

The steam generator 70 further comprises a wash-water flow restraining unit 75 mounted in the container 72 for restraining the wash water from flowing toward the upper end of the outlet tube 78 to maintain uniform water level in the container 72, whereby the inflow of the wash water into the tub 56 and the drum 58 via the outlet tube 78 is prevented.

The wash-water flow restraining unit 75 comprises: a first partition 75a downwardly extended from the top of the upper container part 72a around the steam storing space 72a'; and a second partition 75b upwardly extended from the bottom of the lower container part 72b around the first partition 75a. The first and second partitions 75a and 75b are provided at the lower parts thereof with through-holes (not shown), respectively, through which the wash water flows.

Specifically, the first partition 75a and the second partition 75b overlap with each other while the first and second partitions 75a and 75b are spaced apart from each other around the steam storing space 72a'. As a result, the wash water cannot flow toward the steam storing space 72a', and thus the inflow of the wash water into the tub 56 and the drum 58 via the outlet tube 78 is prevented.

The outlet tube 78 is preferably formed in the shape of a straight cylindrical pipe and connected integrally to the lower container part 72b. The upper end 78a of the outlet tube 78 is disposed inside the steam storing space 72a', and the lower end 78b of the outlet tube 78 is disposed outside the lower container part 72b in such a manner that the lower end 78b of the outlet tube 78 is connected to the steam tube 62d. The outlet tube 78 is vertically disposed as shown in Fig. 6.

In the steam generator 70 with the above-stated construction, the wash water supplied in the container 72 is simply heated to generate steam. The steam generated in the container 72 is temporarily stored in the steam storing space 72a', and then supplied into the steam tube 62d via the outlet tube 78. At this time, the pressure of the steam guided along the outlet tube 78 is not higher than the atmospheric pressure with the result that the steam does not smoothly flow.

To this end, the steam generator 70 may further comprise a blowing fan (not shown) mounted in the outlet tube 78 or the steam tube 62d for blowing the steam into the tub 56 and the drum 58.

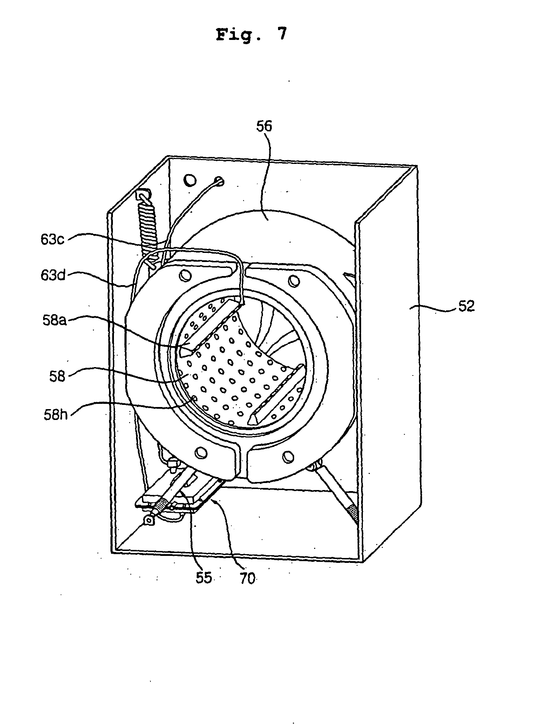

Fig. 7 is a perspective view of a steam jet drum washing machine according to a second preferred embodiment of the present invention.

As shown in Fig. 7, the steam jet drum washing machine according to the second preferred embodiment of the present invention is identical to the steam jet drum washing machine according to the first preferred embodiment of the present invention except that the steam generator 70 is disposed below the tub 56 between the tub 56 and the casing 52, for example, the steam generator is securely mounted to the tub 56 or the casing 52 by means of fixing members (not shown).

Consequently, the water-supply tube 63c connected between the steam generator 70 and the water-supply valve assembly (not shown) is disposed between one side of the tub 56 and the casing 52. Similarly, the steam tube 63d connected between the steam generator 70 and the tub 56 is disposed between one side of the tub 56 and the casing 52.

When the steam generator 70 is disposed below the tub 56 as described above, the steam generator 70 may be installed in an empty space defined below the tub 56 between the tub 56 and the casing 52. Consequently, the total size of the drum washing machine is not increased even though the steam generator 70 is mounted in the drum washing machine.

The operation of the steam jet drum washing machine with the above-stated construction according to the present invention will now be described.

When a washing process is performed while clothes are put in the drum 58, the water-supply valve and the auxiliary water-supply valve are opened so that a proper amount of wash water is supplied into the tub 56 and the drum 58 depending upon the amount of the clothes. The wash water passes through the auxiliary water-supply tube 62c', and then passes through the detergent box assembly 62b. The wash water having passed through the detergent box assembly 62b is supplied into the tub 56 together with a detergent.

When the wash water is supplied into the tub 56, the water-level sensor senses the level of the wash water supplied into the tub 56. After a proper amount of wash water is supplied into the tub 56, the auxiliary water-supply valve is closed. Consequently, the wash water is no longer supplied into the tub 56 and the drum 58 via the auxiliary water-supply tube 62c'.

When the wash water is to be sprayed in a phase of steam according to a user's selection, the water-supply valve and the inlet valve 76 are opened so that the wash water passes through the water-supply tube 62c, and is then supplied into the steam generator 70 where the wash water is heated to obtain high-temperature steam. The high-temperature steam generated in the steam generator 70 is sprayed into the tub 56 and the drum 58 via the steam tube 62d.

Specifically, when the inlet valve 76 is opened, the wash water is supplied into the container 72. After the wash water is supplied into the container 72 to a predetermined water level, the inlet valve 76 is closed. The level of the wash water supplied into the container 72 is either directly sensed by the auxiliary water-level sensor or indirectly sensed by the water-level sensor.

Sensing the level of the wash water supplied into the container 72 by the water-level sensor will be hereinafter described in detail. When the wash water is continuously supplied into the container 72 over the capacity of the container 72, the wash water is guided into the tub 56 and the drum 58 via the outlet tube 78 and the steam tube 62d. At this time, the fluctuation in level of the wash water in the tub 56 and the 58 is sensed by the water-level sensor, by which it is indirectly sensed that the wash water is supplied into the container 72 to the full capacity of the container 72.

Thereafter, the inlet valve 76 is closed, and the heater 74 is operated. As the heater 74 is operated, the wash water is heated to generate high-temperature steam, which is temporarily stored in the steam storing space 72a'.

At this time, the temperature sensor 79 senses the temperature of the interior of the container 72, and the operation of the heater 74 is controlled on the basis of the sensed temperature so that the heater 74 is not overheated.

As the steam is stored in the steam storing space 72a' to the extent that the pressure in the container 74 is over a predetermined pressure, the steam is supplied into the tub 56 and the drum 58 via the outlet tube 78 and the steam tube 62d so that the clothes are rapidly soaked.

At this time, the steam is sprayed into the tub 56 and the drum 58 through the end 62d' of the steam tube 62d, which is formed in the shape of a nozzle. As a result, the clothes are rapidly soaked.

The blowing fan mounted in the outlet tube 78 or the steam tube 62d is preferably operated so that the steam is rapidly supplied into the tub 56 and the drum 58.

When a proper amount of the wash water is supplied into the tub 56 and the drum 58, the water-supply valve is closed, and the motor 60 is operated. When the drum 58 is rotated by operation of the motor 60, the clothes are lifted to a predetermined height by the vanes 58a and then dropped from the vanes 58a. In this way, a washing process is performed.

After the washing process is finished, the drainage pump is operated so that the wash water is discharged. Subsequently, the motor 60 is rotated at a high speed, and thus the drum 58 is also rotated at a high speed. When the drum 58 is rotated, the wash water contained in the clothes is separated from the clothes by means of the centrifugal force of the drum 58. In this way, an intermittent dewatering process is performed. The water-supply valve and the auxiliary water-supply valve are opened again so that wash water is supplied into the tub 56 and the drum 58 to a predetermined level via the auxiliary water-supply tube 62c'. Thereafter, the drum 58 is rotated so that a rinsing process is performed.

The aforementioned rinsing and intermittent dewatering processes are alternately and repeatedly carried out, and finally a dewatering process is performed. In this way, a process for cleaning the clothes is completed.

It should be noted that the wash water may be supplied into the steam generator 70 where the wash water is heated to obtain high-temperature steam, and the high-temperature steam may be sprayed into the tub 56 and the drum 58 even when the clothes are washed or rinsed as well as when the wash water is initially supplied into the tub 56 and the drum 58, in order to improve sterilizing and washing efficiencies of the drum washing machine.

When the drum 58 is rotated to wash or rinse the clothes, vibration caused by the rotation of the drum 58 is transmitted to the entire drum washing machine with the result that the wash water is fluctuated in the container 72. When the wash water flows toward the steam storing space 72a' in the container 72, the flow of the wash water is restrained by the first and second partitions 75a and 75b. Consequently, the inflow of the wash water into the tub 56 and the drum 58 via the outlet tube 78 is prevented.

As apparent from the above description, the present invention provides a steam jet drum washing machine characterized in that wash water is supplied into a steam generator where the wash water is heated to obtain high-temperature steam, and the steam is sprayed into a tub and a drum of the drum washing machine, thereby rapidly soaking clothes in the wash water when the wash water is initially supplied into the tub and the drum, saving wash water and electric energy. In addition, the wash water is supplied in a phase of high-temperature steam when clothes are washed and rinsed, whereby sterilizing and washing efficiencies of the drum washing machine are improved.

Furthermore, the steam jet drum washing machine is characterized in that the wash water is heated in a container of the steam generator to generate steam, the generated stem is temporarily stored in a steam storing space defined in the container, which is then directly supplied into the tub and drum via an outlet tube. Consequently, the size of the container in which the wash water is heated can be reduced, and thus the total size of the drum washing machine can also be reduced. In addition, the steam jet drum washing machine does not require an additional outlet valve, whereby costs of manufacturing the drum washing machine are reduced.

## Claims

1. A steam jet drum washing machine comprising:
- a tub (56) disposed in a casing (52);
- a drum (58) rotatably mounted in the tub (56);
- la steam generator (70) including a container (72) for heating wash-water to generate high-temperature steam and supplying the generated high-temperature steam into the tub and the drum (58); and
- a water-supply unit (62) disposed at one side of the tub (56); the water-supply unit (62) comprises:
-- a water-supply valve assembly (62a) disposed at one end of the casing (52) for supplying the water;
-- an auxiliary water-supply tube (62c') having one end connected to the water-supply valve assembly (62a) for supplying water into the tub (56); and
-- a water-supply tube (62c) having one end connected to the water-supply valve assembly (62a) and the other end connected to the container (72) for supplying the water into the steam generator (70).

2. The machine as set forth in claim 1, wherein the steam generator further comprises:
- a heater (74) mounted in the container (72) for heating water in the container (72); and
- an outlet tube (78) for supplying the generated steam into the tub and the drum (58), the outlet tube having an upper end (78a) disposed in an upper part of the container (72) and a lower end (78b) disposed outside the container.

3. The machine as set forth in claim 1 or 2. wherein the water-supply unit (62) further comprises a detergent box assembly (62b) mounted between the water-supply valve assembly (62a) and the tub (56) for storing a detergent; wherein the auxiliary water-supply tube (62c') is connected between the water-supply valve assembly (62a) and the detergent box assembly (62b).

4. The machine as set forth in claim 1. 2 or 3. wherein the water-supply unit further comprises:
- a steam tube (62d) having one end connected to the outlet tube (78) and the other end disposed in the tub (56) and the drum (58) for supplying the steam downwardly into the tub (56) and the drum (58).

5. The machine as set forth in claim 4, further comprising a gasket (57) located between the tub (56) and the casing (52) and wherein the end (62d') of the steam tube (62d) disposed in the tub (56) and the drum (58) penetrates through the upper end of the gasket (57).

6. The machine as set forth in claim 4 or 5, wherein the end (62d') of the steam tube (62d) is formed in the shape of a nozzle for spraying the steam into the tub (56) and the drum (58).

7. The machine as set forth in claim 4. 5 or 6, wherein the end (62d') of the steam tube (62d) is disposed in the drum (58) and the tub (56).

8. The machine as set forth in claim 1. wherein the heater (74) is horizontally disposed in the lower part of the container (72) so that the heater (74) can be submerged under the water even when the water is supplied into the container (72) to a minimum water level.

9. The machine as set forth in claim 8. wherein the heater (74) is an electric heater formed in the shape of a curved pipe so that the heating surface area is increased.

10. The machine as set forth in claim 1, wherein the steam generator (70) further comprises a temperature sensor (79) for sensing the temperature inside the container (72) to control the operation of the heater (74) on the basis of the temperature inside the container (72).

11. The machine as set forth in claim 1, wherein the steam generator (70) further comprises a blowing fan mounted in the outlet tube (78) or the steam tube (62d) for blowing the steam into the tub (56) and the drum (58).

12. The machine as set forth in claim 1, wherein the steam generator (70) further comprises a wash-water flow restraining unit (75) mounted in the container (72) for restraining flow of the wash-water stored in the container (72).

13. The machine as set forth in claim 12, wherein the wash-water flow restraining unit (75) comprises:
- a first partition (75a) downwardly extended from the top of the container (70) around the steam storing space.

14. The machine as set forth in claim 13, wherein the wash-water flow restraining unit (75) further comprises:
- a second partition (75b) upwardly extended from the bottom of the container (72) around the first partition (75a).

15. The machine as set forth in claim 14, wherein the first and second partitions (75a, 75b) are provided at the lower parts thereof with through-holes, respectively, for permitting flow of the water through the through-holes.

16. The machine as set forth in claim 1. wherein the steam generator (70) is disposed above the tub (56) between the tub (56) and the casing (52).

17. The machine as set forth in claim 1, wherein the steam generator (70) is disposed below the tub (56) between the tub (56) and the casing (52).

18. The machine as set forth in claim 1, wherein the container (72) comprises:
- an upper container part (72a) forming an upper part of the container (72); and
- a lower container part (72b) forming a lower part of the container (72).

19. The machine as set forth in claim 1 or 18, wherein the container (72) is provided at the upper part thereof with a steam storing space.

20. The machine as set forth in claim 19, wherein the steam storing space is an upwardly protruded portion (72a') of the upper part of the container (72) for storing the steam.

21. The machine as set forth in claim 18, wherein the upper container part (72a) and the lower container part (72b) are attached to each other by means of bolts (B).

22. The machine as set forth in claim 19. wherein the upper end (78a) of the outlet tube (78) is disposed inside the steam storing space.

23. The machine as set forth in claim 22, wherein the outlet tube (78) is formed in the shape of a straight cylindrical pipe.

24. The machine as set forth in claim 1, wherein the steam generator (70) includes an inlet valve (76) disposed between the water-supply unit (62) and the container (72) for supplying the water into the container (72).

25. The machine as set forth in claim 24, wherein the inlet valve (76) is a solenoid valve.

## Patentansprüche

1. Dampfstrahl-Trommelwaschmaschine, die umfasst:
- einen Bottich (56), der in einem Gehäuse (52) angeordnet ist;
- eine Trommel (58), die in dem Bottich (56) drehbar angebracht ist;
- einen Dampfgenerator (70) mit einem Behälter (72) zum Erhitzen von Waschwasser, um Hochtemperaturdampf zu erzeugen, und zum Liefern des erzeugten Hochtemperaturdampfs in den Bottich und in die Trommel (58); und
- eine Wasserzufuhreinheit (62), die auf einer Seite des Bottichs (56) angeordnet ist, wobei die Wasserzufuhreinheit (62) umfasst:
-- eine Wasserzufuhr-Ventilanordnung (62a), die an einem Ende des Gehäuses (52) angeordnet ist, um Wasser zuzuführen;
-- ein Wasserzufuhrhilfsrohr (62c'), wovon ein Ende mit der Wasserzufuhr-Ventilanordnung (62a) verbunden ist, um dem Bottich (56) Wasser zuzuführen; und
-- ein Wasserzufuhrrohr (62c), wovon ein Ende mit der Wasserzufuhr-Ventilanordnung (62a) verbunden ist und das andere Ende mit dem Behälter (72) verbunden ist, um dem Dampfgenerator (70) Wasser zuzuführen.

2. Maschine nach Anspruch 1, wobei der Dampfgenerator ferner umfasst:
- eine Heizeinrichtung (74), die im Behälter (72) angebracht ist, um Wasser in dem Behälter (72) zu erhitzen; und
- ein Auslassrohr (78), um dem Bottich und der Trommel (58) erzeugten Dampf zuzuführen, wobei das Auslassrohr ein oberes Ende (78a), das in einem oberen Teil des Behälters (72) angeordnet ist, und ein unteres Ende (78b), das außerhalb des Behälters angeordnet ist, besitzt.

3. Maschine nach Anspruch 1 oder 2, wobei die Wasserzufuhreinheit (62) ferner eine Waschmittelkastenanordnung (62b) umfasst, die zwischen der Wasserzufuhr-Ventilanordnung (62a) und dem Bottich (56) angebracht ist, um ein Waschmittel aufzubewahren, wobei das Wasserzufuhrhilfsrohr (62c') zwischen der Wasserzufuhr-Ventilanordnung (62a) und der Waschmittelkastenanordnung (62b) angeschlossen ist.

4. Maschine nach Anspruch 1, 2 oder 3, wobei die Wasserzufuhreinheit ferner umfasst:
- ein Dampfrohr (62d), wovon ein Ende mit dem Auslassrohr (78) verbunden ist und das andere Ende in dem Bottich (56) und der Trommel (58) angeordnet ist, um den Dampf nach unten in den Bottich (56) und in die Trommel (58) zu liefern.

5. Maschine nach Anspruch 4, die ferner eine Dichtung (57) umfasst, die sich zwischen dem Bottich (56) und dem Gehäuse (52) befindet, wobei das Ende (62d') des Dampfrohrs (62d), das in dem Bottich (56) und in der Trommel (58) angeordnet ist, das obere Ende der Dichtung (57) durchdringt.

6. Maschine nach Anspruch 4 oder 5, wobei das Ende (62d') des Dampfrohrs (62d) in Form einer Düse ausgebildet ist, um den Dampf in den Bottich (56) und in die Trommel (58) zu sprühen.

7. Maschine nach Anspruch 4, 5 oder 6, wobei das Ende (62d') des Dampfrohrs (62d) in der Trommel (58) und in dem Bottich (56) angeordnet ist.

8. Maschine nach Anspruch 1, wobei die Heizeinrichtung (74) im unteren Teil des Behälters (72) horizontal angeordnet ist, so dass die Heizeinrichtung (74) in das Wasser eingetaucht sein kann, selbst wenn dem Behälter (72) Wasser bis zu einem minimalen Wasserspiegel zugeführt wird.

9. Maschine nach Anspruch 8, wobei die Heizeinrichtung (74) eine elektrische Heizeinrichtung ist, die in Form eines gebogenen Rohrs ausgebildet ist, so dass die Heizfläche erhöht ist.

10. Maschine nach Anspruch 1, wobei der Dampfgenerator (70) ferner einen Temperatursensor (79) umfasst, um die Temperatur in dem Behälter (72) zu erfassen, um den Betrieb der Heizeinrichtung (74) anhand der Temperatur im Behälter (72) zu steuern.

11. Maschine nach Anspruch 1, wobei der Dampfgenerator (70) ferner ein im Auslassrohr (78) oder im Dampfrohr (62d) montiertes Gebläse umfasst, um Dampf in den Bottich (56) und in die Trommel (58) zu blasen.

12. Maschine nach Anspruch 1, wobei der Dampfgenerator (70) ferner eine Waschwasserströmungs-Begrenzungseinheit (75) umfasst, die in dem Behälter (72) angebracht ist, um die Strömung von in dem Behälter (72) aufbewahrtem Waschwasser zu begrenzen.

13. Maschine nach Anspruch 12, wobei die Waschwasserströmungs-Begrenzungseinheit (75) umfasst:
- eine erste Trennwand (75a), die sich von der Oberseite des Behälters (70) um den Dampfaufbewahrungsraum nach unten erstreckt.

14. Maschine nach Anspruch 13, wobei die Waschwasserströmungs-Begrenzungseinheit (75) ferner umfasst:
- eine zweite Trennwand (75b), die sich vom Boden des Behälters (72) um die erste Trennwand (75a) nach oben erstreckt.

15. Maschine nach Anspruch 14, wobei die erste und die zweite Trennwand (75a, 75b) in ihren unteren Teilen mit jeweiligen Durchgangslöchern versehen sind, um die Strömung des Wassers durch die Durchgangslöcher zuzulassen.

16. Maschine nach Anspruch 1, wobei der Dampfgenerator (70) über dem Bottich (56) zwischen dem Bottich (56) und dem Gehäuse (52) angeordnet ist.

17. Maschine nach Anspruch 1, wobei der Dampfgenerator (70) unter dem Bottich (56) zwischen dem Bottich (56) und dem Gehäuse (52) angeordnet ist.

18. Maschine nach Anspruch 1, wobei der Behälter (72) umfasst:
- einen oberen Behälterteil (72a), der einen oberen Teil des Behälters (72) bildet; und
- einen unteren Behälterteil (72b), der einen unteren Teil des Behälters (72) bildet.

19. Maschine nach Anspruch 1 oder 18, wobei der Behälter (72) in seinem oberen Teil mit einem Dampfaufbewahrungsraum versehen ist.

20. Maschine nach Anspruch 19, wobei der Dampfaufbewahrungsraum ein nach oben vorstehender Abschnitt (72a') des oberen Teils des Behälters (72) zum Aufbewahren des Dampfs ist.

21. Maschine nach Anspruch 18, wobei der obere Behälterteil (72a) und der untere Behälterteil (72b) mittels Bolzen (B) aneinander befestigt sind.

22. Maschine nach Anspruch 19, wobei das obere Ende (78a) des Auslassrohrs (78) in dem Dampfaufbewahrungsraum angeordnet ist.

23. Maschine nach Anspruch 22, wobei das Auslassrohr (78) in Form eines geraden zylindrischen Rohrs ausgebildet ist.

24. Maschine nach Anspruch 1, wobei der Dampfgenerator (70) ein Einlassventil (76) umfasst, das zwischen der Wasserzufuhreinheit (62) und dem Behälter (72) angeordnet ist, um dem Behälter (72) Wasser zuzuführen.

25. Maschine nach Anspruch 24, wobei das Einlassventil (76) ein elektromagnetisches Ventil ist.

## Revendications

1. Lave-linge à tambour jet de vapeur comprenant :
une cuve (56) placée dans une carrosserie (52) ;
un tambour (58) monté à rotation dans la cuve (56) ;
un générateur de vapeur (70) comprenant un réservoir (72) pour chauffer l'eau de lavage afin de produire de la vapeur à haute température et d'introduire la vapeur à haute température obtenue dans la cuve et dans le tambour (58) ; et
une unité d'alimentation en eau (62) disposée au niveau d'un côté de la cuve (56) ;
dans lequel l'unité d'alimentation en eau (62) comprend :
un ensemble de vanne d'arrivée en eau (62a) disposé au niveau d'une extrémité de la carrosserie (52) pour fournir l'eau ;
un tuyau d'arrivée d'eau auxiliaire (62c') ayant une extrémité reliée à l'ensemble de vanne d'arrivée en eau (62a) pour introduire de l'eau dans la cuve (56) ; et
un tuyau d'arrivée d'eau (62c) ayant une extrémité reliée à l'ensemble de vanne d'arrivée en eau (62a) et l'autre extrémité reliée au réservoir (72) pour introduire l'eau dans le générateur de vapeur (70).

2. Lave-linge selon la revendication 1, dans lequel le générateur de vapeur comprend en outre :
un dispositif de chauffage (74) monté dans le réservoir (72) pour chauffer l'eau contenue dans le réservoir (72) ; et
un tuyau de sortie (78) pour introduire la vapeur produite dans la cuve et dans le tambour (58), le tuyau de sortie ayant une extrémité supérieure (78a) disposée dans une partie supérieure du réservoir (72) et une extrémité inférieure (78b) disposée à l'extérieur du réservoir.

3. Lave-linge selon la revendication 1 ou 2, dans lequel l'unité d'alimentation en eau (62) comprend en outre une boîte à détergent (62b) montée entre l'ensemble de vanne d'arrivée en eau (62a) et la cuve (56) pour contenir un détergent ; dans lequel le tuyau d'arrivée d'eau auxiliaire (62c') est relié entre l'ensemble de vanne d'arrivée en eau (62a) et la boîte à détergent (62b).

4. Lave-linge selon la revendication 1, 2 ou 3, dans lequel l'unité d'alimentation en eau comprend en outre :
un tuyau à vapeur (62d) ayant une extrémité reliée au tuyau de sortie (78) et l'autre extrémité disposée dans la cuve (56) et dans le tambour (58) pour entraîner la vapeur vers le bas dans la cuve (56) et dans le tambour (58).

5. Lave-linge selon la revendication 4, comprenant en outre un joint d'étanchéité (57) placé entre la cuve (56) et la carrosserie (52) et dans lequel l'extrémité (62d') du tuyau à vapeur (62d) disposée dans la cuve (56) et dans le tambour (58) pénètre à travers l'extrémité supérieure du joint d'étanchéité (57).

6. Lave-linge selon la revendication 4 ou 5, dans lequel l'extrémité (62d') du tuyau à vapeur (62d) a la forme d'une tuyère pour pulvériser la vapeur dans la cuve (56) et dans le tambour (58).

7. Lave-linge selon la revendication 4, 5 ou 6, dans lequel l'extrémité (62d') du tuyau à vapeur (62d) est disposée dans le tambour (58) et dans la cuve (56).

8. Lave-linge selon la revendication 7, dans lequel le dispositif de chauffage (74) est disposé horizontalement dans la partie inférieure du réservoir (72) de telle sorte que le dispositif de chauffage (74) peut être immergé sous l'eau même quand l'eau est introduite dans le récipient (72) à un niveau d'eau minimum.

9. Lave-linge selon la revendication 8, dans lequel le dispositif de chauffage (74) est un dispositif de chauffage électrique sous la forme d'un tube courbé de telle sorte que la surface de chauffe est augmentée.

10. Lave-linge selon la revendication 1, dans lequel le générateur de vapeur (70) comprend en outre un capteur de température (79) pour détecter la température à l'intérieur du réservoir (72) afin de commander le fonctionnement du dispositif de chauffage (74) en fonction de la température à l'intérieur du réservoir (72).

11. Lave-linge selon la revendication 1, dans lequel le générateur de vapeur (70) comprend en outre un ventilateur monté dans le tuyau de sortie (78) ou dans le tuyau à vapeur (62d) pour envoyer la vapeur dans la cuve (56) et dans le tambour (58).

12. Lave-linge selon la revendication 1, dans lequel le générateur de vapeur (70) comprend en outre une unité de retenue d'eau de lavage (75) montée dans le réservoir (72) pour empêcher l'écoulement de l'eau de lavage contenue dans le réservoir (72).

13. Lave-linge selon la revendication 12, dans lequel l'unité de retenue d'eau de lavage (75) comprend en outre :
une première séparation (75a) s'étendant vers le bas depuis le haut du réservoir (72) autour de l'espace d'emmagasinage de vapeur.

14. Lave-linge selon la revendication 13, dans lequel l'unité de retenue d'eau de lavage (75) comprend en outre :
une deuxième séparation (75b) s'étendant vers le haut depuis le bas du réservoir (72) autour de la première séparation (75a).

15. Lave-linge selon la revendication 14, dans lequel les première et deuxième séparations (75a, 75b) sont munies au niveau de leurs parties inférieures de trous traversants, respectivement, pour permettre l'écoulement de l'eau à travers les trous traversants.

16. Lave-linge selon la revendication 1, dans lequel le générateur de vapeur (70) est disposé au-dessus de la cuve (56) entre la cuve (56) et la carrosserie (52).

17. Lave-linge selon la revendication 1, dans lequel le générateur de vapeur (70) est disposé au-dessous de la cuve (56) entre la cuve (56) et la carrosserie (52).

18. Lave-linge selon la revendication 1, dans lequel le réservoir (72) comprend :
une partie supérieure de réservoir (72a) formant une partie supérieure du réservoir (72) ; et
une partie inférieure de réservoir (72b) formant une partie inférieure du réservoir (72).

19. Lave-linge selon la revendication 1 ou 18, dans lequel le réservoir (72) est muni dans sa partie supérieure d'un espace d'emmagasinage de vapeur.

20. Lave-linge selon la revendication 19, dans lequel l'espace d'emmagasinage de vapeur est une partie faisant saillie vers le haut (72a') de la partie supérieure du réservoir (72) pour emmagasiner la vapeur.

21. Lave-linge selon la revendication 18, dans lequel la partie supérieure de réservoir (72a) et la partie inférieure de réservoir (72b) sont fixées l'une à l'autre par des boulons (B).

22. Lave-linge selon la revendication 19, dans lequel l'extrémité supérieure (78a) du tuyau de sortie (78) est disposée à l'intérieur de l'espace d'emmagasinage de vapeur.

23. Lave-linge selon la revendication 22, dans lequel le tuyau de sortie (78) a la forme d'un tuyau cylindrique droit.

24. Lave-linge selon la revendication 1, dans lequel le générateur de vapeur (70) comprend une vanne d'entrée (76) disposée entre l'unité d'alimentation en eau (62) et le réservoir (72) pour introduire de l'eau dans le réservoir (72).

25. Lave-linge selon la revendication 24, dans lequel la vanne d'entrée (76) est une électrovanne.
